# EUROPEAN PATENT APPLICATION

(11) **EP 0 890 534 A1**
(43) Date of publication of application: **13.01.1999**
(21) Application number: 98305214.3
(22) Date of filing: 01.07.1998
(51) Int. Cl.: B65H 3/00, B25H 3/04

(54) **Tool transporter with deployable wheels**

(30) Priority: 02.07.1997 US 51527 P
(71) Applicant: Lyon, Christopher, Estill, South Carolina 29918 (US)
(72) Inventor: Lyon, Christopher, Estill, South Carolina 29918 (US)
(74) Representative: Ede, Eric

(57) **Abstract**

A transportation and storage device for tools or other items comprising a trolley (100) which has an upstanding support adapted to carry said tools and which has a wheel or bogie arrangement that provides a stable working base in use but which can be moved into a space saving position for storage of the trolley. The wheel or bogie arrangement including an elongate arm (4) the elongate arm at one end having the wheel or bogie attached thereto and at the other end being pivotally attached to the trolley. The elongate arm being held in position when the trolley is in use to provide a stable operating base, but is rotatable about the pivotal attachment so that a substantial portion at least of the elongate arm is tucked under the trolley.

## Description

This invention relates to a transport and storage device, and in particular, to a transportation and storage device for garden tools and implements, which may be manually transported and manoeuvred.

People working in and around the home or garden, or performing landscaping tend to use a large number and variety of tools and implements. These tools and implements may include hoses, rakes, shovels, spades, brooms, edgers, pruners, dustpans, and other tools and implements having long and/ or short handles. Powered tools may also be required.

Typically this wide variety of tools and implements of lawn and garden tools are stored in a garage or shed or other similar briding. The user must make multiple trips back and forth to the storage area as the particular tool which is needed is obtained from storage and then returned.

Various and sundry material for handling and transporting devices are available. Such devices come in all types and configurations. Most of these devices are so general so as to be of practical use, since such carts and dollies are not configured to organise the tools in an efficient and orderly manner to provide for reasonable storage of the tools. On the other hand, many devices are so particularised in their structure as to be adapted only for, by way of example, had tools, and are not suited for transporting devices having long handles such as a hose or rake.

Further such prior art devices are not generally created to allow for storage in confined areas or other areas where space is at a premium. Frequently, in the domestic setting, space in a garage or other shed is at a premium, such that storage and transportation devices cannot take up a substantial amount of space and be practical.

The present invention is concerned with providing a transportation and storage device with improved ease of use and organisation.

In accordance with the present invention there is provided a transportation and storage device for tools or other items comprising a trolley which has an upstanding support adapted to carry said tools and which has a roller device arrangement, such as a wheel, bogie or castor arrangement that provides a stable working base in use but which can be moved into a space saving position for storage of the trolley.

The present invention provides a device which will transport a wide variety of commonly used lawn and garden tools and implements and the like. The device enabling the organisation of the tools so that they are readily available, and which provides convenient means for the for storing of the tools. The device is designed to occupy minimal space while in storage and the movement of the wheel or bogie arrangement allows this to be achieved.

In one arrangement of the present invention the wheels or bogie arrangement comprises support members such as elongate arms pivotally fitted to the trolley which in use extend beyond the dimensions of the trolley and which can be moved so as to be substantially tucked or stowed away under the trolley in the space saving configuration.

In one particular arrangement of the invention each of the wheels, bogies, or castors are fitted to the trolley by an elongate arm to which it is fitted at one end, whilst the other end is pivotally attached to the trolley, and is held in position when the trolley is in use to provide a stable operating base but which can be rotated about pivotal attachment to the trolley so that a substantial portion at least of the elongate arm is tucked under the trolley to provide a space saving storage position.

It will be appreciated that the trolley has to provide two distinct functions to be workable in the way it was intended and those are the operating base of the trolley should be as stable as is possible when in use and the trolley should be adaptable enough to occupy minimal space in storage but still provide storage means for the tools and implements. Clearly the actual position reached is a balance between the two ideals and this revolves around the wheel base that can be provided for the trolley. The use of the pivotal legs as described above enables this to be achieved easily and with the minimum of moving parts.

In one embodiment of the invention the trolley comprises a base, a top and two end panels which are fitted together to form an open frame. The open frame may be provided with individual carrying means such as hooks or boxes for the carrying of the tools or implements. In addition a series of holes or recesses may be provided in the top and base respectively for the carrying of tools and implements.

A handle may be provided for the pulling and manoeuvring of the trolley.

In one arrangement of the present invention a pivotal waste sack carrier may be provided.

The invention will now be illustrated by way of description of an example transporting and storage device in accordance with the present invention with reference to the accompanying drawings in which:
- Fig 1: shows an isometric view of a central section of a transporting and storage device for garden tools according to the present invention:
- Fig 2: shows an isometric view of a transporting and storage device according to the present invention:
- Fig 3: shows an isometric view of the device shown in Figure 2 of the drawings:

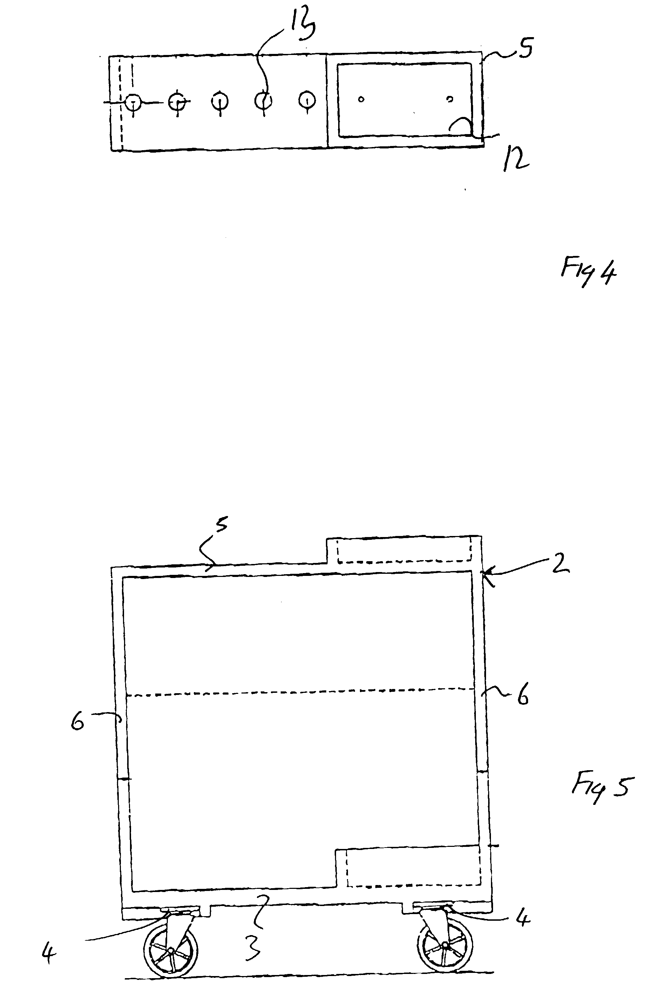

- Fig 4: shows the top section of the central section of the device as shown in Figure 1 of the drawings:
- Fig 5: shows a side view of the central section of the device as shown in Fig 1;and
- Figs 6a to 6c: show the base section of the central section of the device shown in Fig 1 of the drawings.

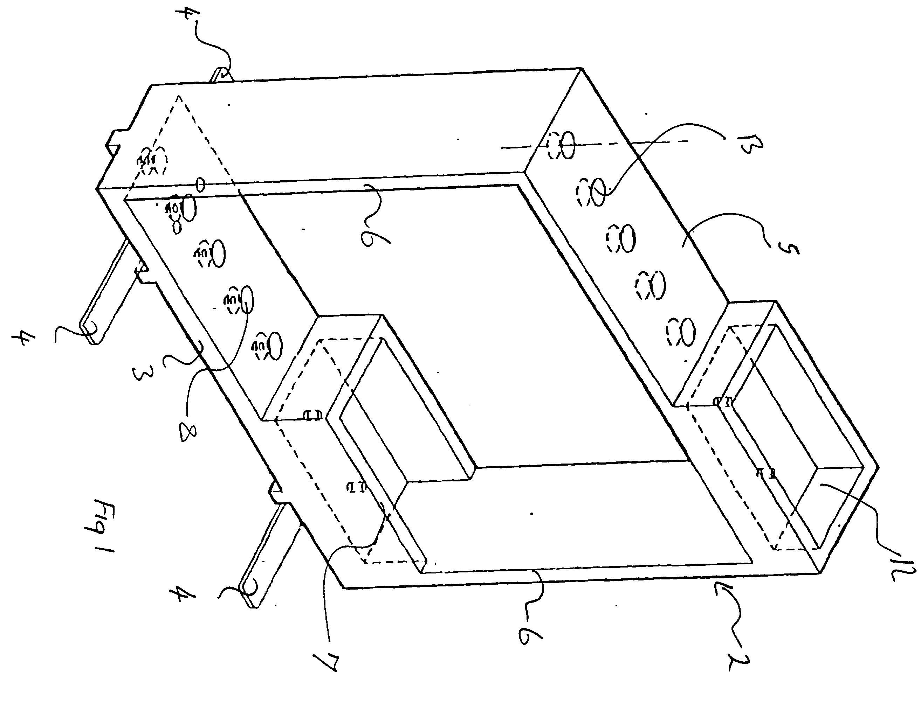

Referring to the drawings the device 1 comprises a trolley having a central section 2 as shown in Fig 1 of the drawings which is adapted for the transporting of garden tools and implements. The central section 2 forms a rectilinear box frame and includes:
- a base 3 having elongate arms 4 for wheels, bogies, or castorsto allow the movement of the trolley;
- a top panel 5 fixed substantially parallel in orientation to the base 3; and
- two end panels 6 interconnecting the top panel 5 and the base 3.

The frame forms an upstanding support which has a relatively narrow width in comparison to the length so providing a relatively slim "footprint".

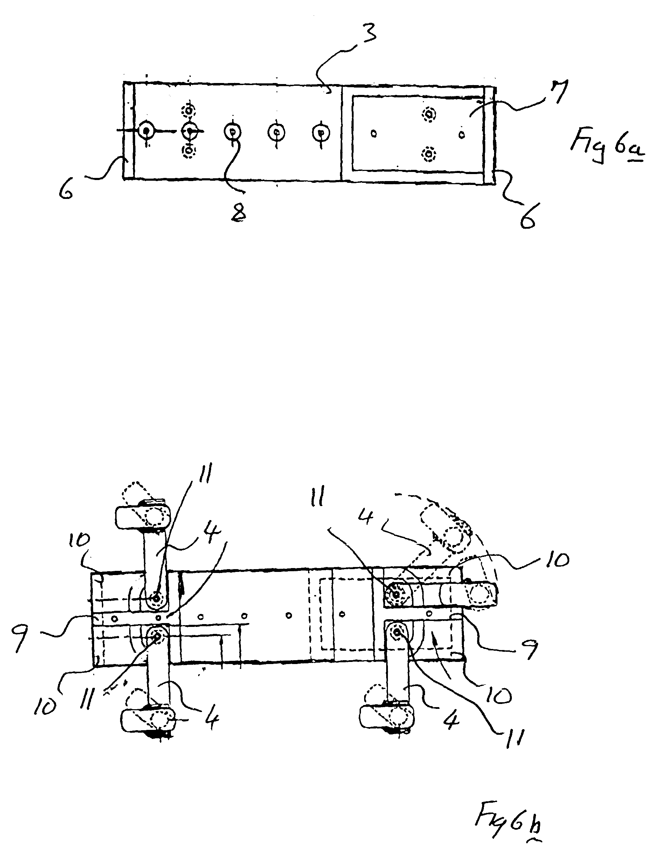

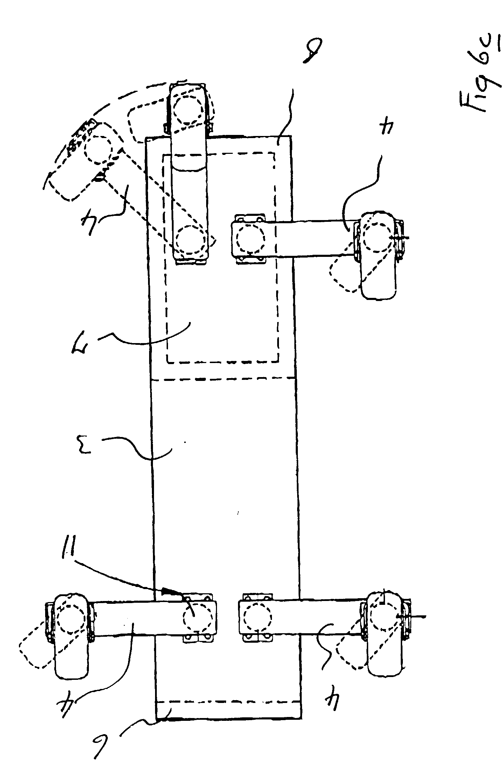

The base 3 comprises a flat panel like member which is shown in more detail in Figs 5a to 5b of the drawings. An open top box 7 is provided in one end of the member and a series of evenly spaced recesses 8 extend centrally along the remaining length of the member. The recesses 8 do not extend all the way through the base. A number of drainage holes are strategically placed about the member in both the box 7 and along the remaining length of the member and each of the recesses is provided with a drainage hole.

The elongate arms 4 on which the wheels, bogies, or castors are to be mounted comprises members which extends beyond the side of the base 3 to which they are mounted and so provide a wheelbase considerably larger than the width of the trolley base 3. This helps improve the weight distribution of the trolley and therefore the stability of the device.

The underside of the member is substantially flat and has fitted thereto elongate arms for the wheels, bogies, or castors of the trolley. In order to assist in locating the elongate arms 4 correctly a T-shaped plastic rib member 9 is provided at each end of the member.

This T-shaped member 9 stands proud of the base 3 and thereby acts to isolate substantially rectangular sections 10 at the corners of the base member 3. In the particular example illustrated in the drawings the elongate arms 4 for the wheels, bogies, or castors are fitted into the corner of a respective section 10 by screw fitting a mounting to the base.

In this particular example the elongate arms 4 are pivotally attached to the mountings by way of a pin 11 so that the wheels, bogies, or castors may be pivoted out of the way to allow storage of the device in a confined space. In this case the section 10 of the base for each elongate arm 4 defines an area of the underside of the base that should be kept clear so as to not interfere with this pivotal movement of the elongate arm 4 and the wheels, bogies, or castors attached thereto. Also the mounting of the elongate arms 4 to the base 3 can be set back a distance from the ends of the base 3 and therefore when the elongate arms are pivoted about the mounting the elongate arms 4 tuck under the base 3 to at least some degree and so continue to facilitate storage of the device.

Further the T-shaped member 9 acts as a stop to prevent over-rotation of the elongate arm 4 in one direction and provides the elongate arm 4 with some support.

The wheels, bogies, or castors may be simply screw fitted to the end of the elongate arm remote from the base 3 or if preferred and to give a further degree of movement they may be pivotally attached thereto themselves.

Now referring to Fig 5c of the drawings there is shown an alternative mounting for the elongate arm 4 to the base 3. In this case the T-shaped member 9 has been omitted and the mounting of the elongate arm to the base is of a type in which the pivotal rotation of the elongate arm with respect thereto is limited by the mounting itself. In addition the wheels, bogies, or castors are pivotally mounted to the elongate arm 4. In all other respects this base 3 is the same as the base 3 described in detail above.

The top panel 5 of the trolley is very similar in construction to the base 3 and includes an open top box 12 at one end with a series of evenly spaced hole 13 provided centrally along the remaining length of the top panel 5. The recesses 8 and the 13 in the base 3 and the top panel 5 are configured and aligned with each other to provide a series of individual means for elongate arm of garden implements such as hoes or rakes with the handle of the implement passing through one hole 13 to locate in one of the recesses 8 in the base 3.

The end panels 6 are substantially solid rectangular members which are fitted to extend between the base 3 and the top panel 5. In the example shown in the drawings one of the end panels 6 provides one of the walls for the open boxes 7 and 12 provided in the base 3 and the top panel 5.

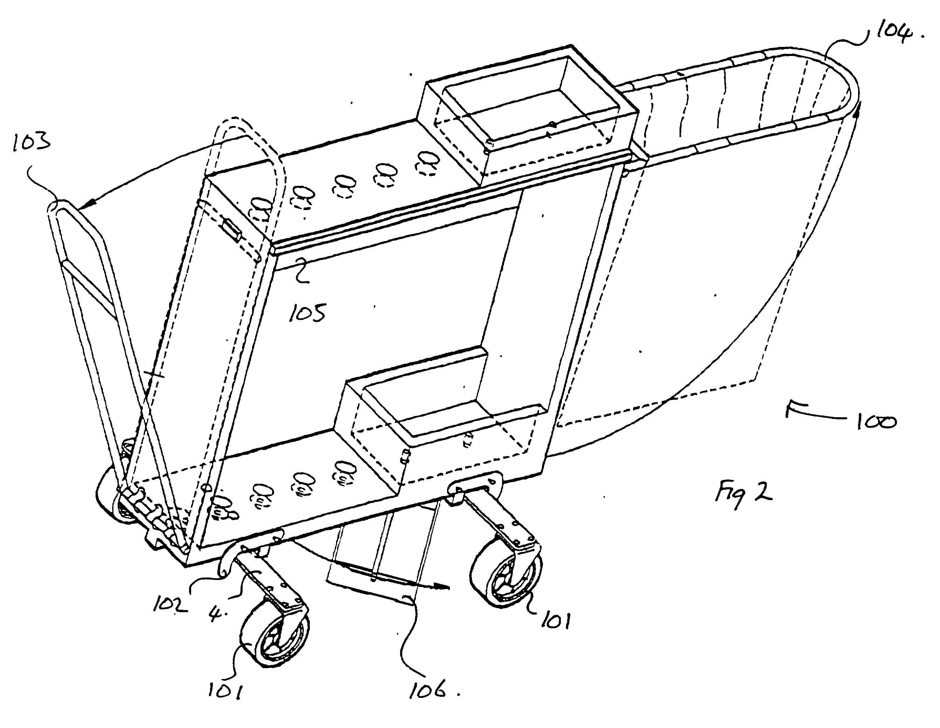

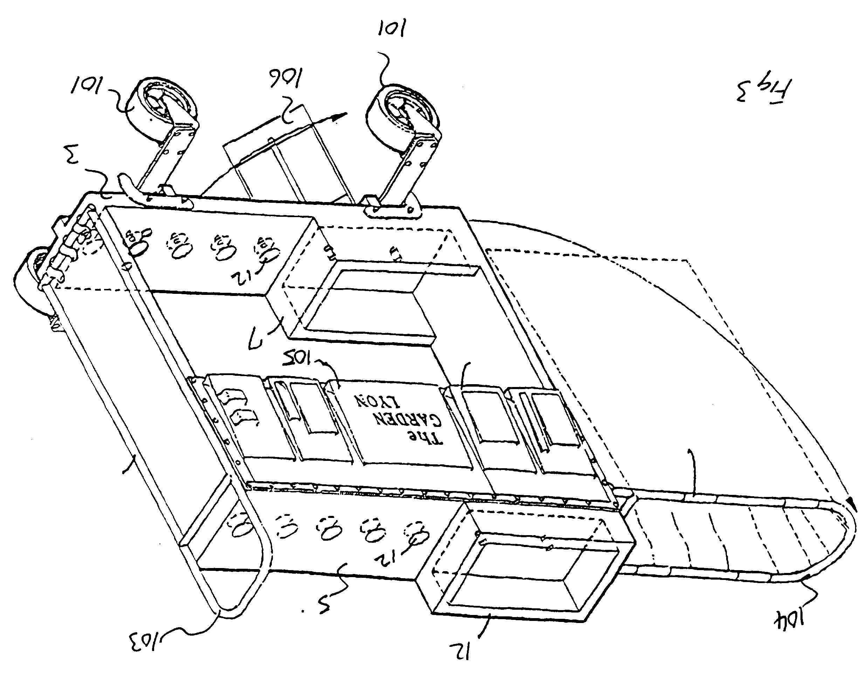

Now referring to Figs 2 and 3 of the drawings a trolley 100 including the central section described above will be described. The trolley 100 is provided with wheels 101 which are fitted to the elongate arms 4 of the central section 1 and curved metal members 102 are fitted to the sides of the base 3 which act to secure the elongate arms in the outlying position and prevent unwanted rotation of the elongate arms during use of the trolley. The metal members may be rotated out of the way so as to allow the elongate arms to be pivoted into an in-line storage position if that is required.

A handle 103 is mounted to one of the end panels near to the bottom thereof and provides means for the easy movement of the trolley. The handle is mounted so that it can be rotated between a first position in which it held against the end panel 6 and a second position in which it is deployed for the movement of the trolley Means 104 may be attached to the other end panel 6 for the carrying of a trash bag. This means 104 may be rotatably mounted to the end panel.

Further carrying means in the form of a pocket panel 105 as shown in Fig 2 may be provided.

Finally a tray member 106 may be provided which pivots out from its fitting to the underside of the base 3.

For the sake of clarity the applicant retains the right to claim independently the features disclosed, whether in the present application or a divisional application thereof, for example, the refuse sack holder and the way this operates.

## Claims

1. A transportation and storage device for tools and the like, comprising a trolley (100) which has a base (3) and an upstanding support having a relatively narrow width with respect to its length to provide a relatively slim "footprint" whereby storage of the device adjacent a wall or in a confined space is facilitated, said support being adapted to support tools in a predetermined and organised manner, whereby in use, a selected tool may be readily accessed, ***characterised in that*** said trolley is provided with roller devices (101), such as wheels or castors, which are deployable from a space-saving stowed, but still operable position at the base of the device substantially within the width of the device to a deployed stable position extending outwardly on either side of the base of the trolley.

2. A device according to claim 1 wherein the upstanding support is formed from a rectilinear box frame (2) having a base panel (3), said base panel having means for pivotally mounting said roller devices by means of arms (4) pivotal in a plane parallel with that of the base panel such as to be stowable underneath said base panel.

3. A device according to claim 1 wherein the upstanding support is formed from a rectilinear box frame (2) having a base panel (3), said base panel having means for mounting said roller devices by means of slider arms slidable in a plane parallel with that of the base panel such as to be stowable underneath said base panel.

4. A device according to claim 2 or claim 3 wherein the frame has an upstanding first end panel (6) having attached thereto a pull handle (102) pivotally mounted to said first end panel so as to be stowable against said first end panel when not in use for pulling the device.

5. A device according to any one of the preceding claims 2 to 4 wherein the frame has an upstanding second end panel (6) having attached thereto a peripheral support (104) for a refuse or trash bag, which support is pivotally mounted for stowage against the second end panel but deployable to an extended position for the purposes of supporting a refuse or trash bag in an open configuration.

6. A device according to any one of claims 1 to 5 wherein the roller devices are lockable in a deployed position by means of swivel latches mounted at the base of the trolley.

7. A device according to any one of the preceding claims wherein the roller devices comprise castors capable of swivelling a full 360°, and at least one of such roller devices is provided with braking means.

8. A device according to any one of the preceding claims wherein part of the device is magnetised to provide magnetic latch means for stowing the pull handle.

9. A device according to any one of the preceding claims wherein a magnetic strip is provided along a side thereof for mounting articles having metallic parts attachable to said magnetic strip.

10. A device according to any one of the preceding claims wherein the device comprises a plurality of tool supports (8,13) respectively adapted to receive and support different types of tool or the like articles, same being selected from trays, pockets, boxes, and panels having apertures for receiving and supporting part of a tool to be stored on the device.
